# EUROPEAN PATENT APPLICATION

(11) **EP 3 193 070 A1**
(43) Date of publication of application: **19.07.2017**
(21) Application number: 17466001.9
(22) Date of filing: 13.01.2017
(51) Int. Cl.: F16N 25/02, F16K 31/122, F15B 13/04, F16K 11/07

(54) **THE HYDRAULICALLY CONTROLLED VALVE DISTRIBUTOR OF HYDRAULIC SYSTEMS, ESPECIALLY OF CENTRAL LUBRICATION SYSTEMS WITH VISCOSE OILS AND PLASTIC GREASES**

(30) Priority: 14.01.2016 CZ 20160016
(71) Applicant: Brabec, Emil, 407 47 Varnsdorf (CZ)
(72) Inventor: Brabec, Emil, 407 47 Varnsdorf (CZ)
(74) Representative: Pavlica, Tomas

(57) **Abstract**

Hydraulically controlled distributor for hydraulic and lubricating circuits, especially for systems of central loss lubrication with viscous oils and greases, the distributor comprising a body (1) at least comprising one supply channel (P) and one working channel (A) terminating in a valve chamber (12) to supply the hydraulic fluid from the supply channel (P) to at least one working channel (A), and with at least one of the piston (2) slidably arranged in the valve chamber (12), and further comprising at least two control chambers (X, Y) arranged on opposite sides of the piston (2) for controlling the movement of the piston (2) in the distributor. Said at least two control chambers (X, Y) are connected to a bi-directional pump (3) to increase the pressure in one of the control chamber and to reduce the pressure at least in the area associated with the second one of the control chambers, wherein in order to change the position of the piston (2) at least a portion of hydraulic fluid is pumped from one control chamber (X) to the other control chamber (Y) to induce a pressure gradient between the two controllers chambers (Y, X), which gives a piston piston (2) in motion, in the direction of the increasing pressure in the control chamber (Y) to the decreasing pressure in the control chamber (X), wherein by a proper running direction of the pump (3) the piston is moved to the desired direction for controlling the flow of the hydraulic fluid through the distributor.

## Description

### TECHNICAL FIELD

The invention relates to a hydraulically controlled distributor of hydraulic and lubricating circuits, particularly for the central loss lubrication systems with high-viscosity oils and greases, wherein said distributor is for the purposes of the present invention considered to be a distributor with a piston having a rectilinear motion.

### BACKGROUND OF THE INVENTION

To control the flow of a hydraulic fluid in hydraulic and lubrication circuits there are are often used distributors with a hydraulically actuated piston with a rectilinear motion used to control the flow of the hydraulic fluid through the distributor. In case of lubrication circuits the hydraulic fluid is particularly represented by high-viscosity oils and greases. Contrary to that, in usual hydraulic circuits the hydraulic fluid is represented by low-viscosity oils. The distributors are used in hydraulic circuits e.g. to change the direction of fluid flow, or to close the path used for controlling a linear, a rotational or an oscillatory hydromotor. The distributors used in lubrication circuits are intended to provide for connecting a lubrication dosing device or a progressive distributor of the lubricant to a main pipeline or possibly to a waste pipeline.

Generally, the distributors described above are devices intended to control a flow of a hydraulic fluid by means of blocking said flow or by changing the direction of said flow. The distributors usually comprise a distributing section and a control section, wherein the distribution section comprise especially a distribution body part having channels terminating in a cylindrical cavity, i.e. so called "valve chamber". A piston is located in the cylindrical cavity for controlling the flow of the hydraulic fluid by its rectilinear motion within said cylindrical cavity. Within the cylindrical cavity, said piston is arranged for a sliding motion, usually having a very small clearance from the inner walls of said cavity. Said control section is a mechanism causing said longitudinal, i.e. rectilinear, movement of the piston in both directions in order to arrange opening and closing of the channels in the distribution section. The piston is considered for the purposes of this application to be particularly a piston, the outer cylindrical surface of which being designed to overlap the inlet/outlet orifices of the channels in the distribution section of the distributor in order to arrange the closing or conversely uncovering them for opening, thus controlling the flow of the hydraulic fluid through the distributor. The main goal of the distributor according to the invention is to achieve the smallest possible pressure loss arising from the flow of the controlled fluid. The hydraulic fluid to be controlled by the distributor according to the invention comprises any kind of lubricant that can be dosed, including high viscous oils and greases. As to the geometry of the distributor, particularly the geometry of the piston and of the embodiment of the channels of the distributors, preferably not only the request how to connect or to close a particular channel should be solved but a respect should be also given to a demand of the largest possible flow cross sections and to an elimination of the hydraulic losses caused by local influences of the geometry of the distribtor. The embodiment of the piston, the position and the embodiment of the channels can vary from according to different embodiments of the distribtor. Connecting or closing the respective channels of hydraulic fluid occurs by changing the position of the piston. The channels are to be understood as a path of the hydraulic fluid through the distributor. Generally, for the purpose of this invention the channels namely comprise:
- Supply channels provided to allow an entry of the hydraulic fluid from a source of the hydraulic fluid into the distributor,
- Working channels providing the hydraulic fluid from the distributor to the place of its consumption, eg. to a hydromotor, or to a lubrication point.
- Drain channels provided to divert the superfluous hydraulic fluid, i.e. fluid in excess, and
- Control channels provided to ensure the controlling displacement of the piston during the regulation of the hydraulic fluid from the supply channel into the working channel, or possibly to a number of working channels.
Particular embodiments of the distributor are essentially determined by its purpose, said purpose essentially providing the number of the channels. The distributor can comprise only one supply channel, but it can comprise more than one supply channels, eg. two, three, four etc. Similarly the distributor can comprise one or more working channels. Please note that a drain channel is not always necessary and it may not be presentat all in certain embodiments of the distributor.

The currently manufactured distributors are designed primarily for low- to medium-viscosity oil for hydraulic circuits contrary to the distributor according to the invention which is designed also for the high viscosity oils and/or greases.

For this invention, as a hydraulic circuit it should be mainly considered a group of hydraulic and other elements, providing the desired function of the hydraulic mechanism, i.e. to provide for an energy transfer between a drive and a driven member. As a lubricating circuit should be considered for the purpose of this invention an assembly of hydraulic and other elements the purpose of which is to transport a lubricant to lubrication points. Both of these types of circuits are very similar, both basically include a hydrogenerator, a reservoir af the hydraulic fluid to be used therein, typically a safety valve, and a distributor having the control piston. The hydraulic circuit also typically includes a hydraulic motor - hydromotor, while the lubrication circuit includes a lubricant dispenser. All said parts are conveniently connected by convenient hydraulic pipelines to provide the desired function or functions of the hydraulic circuit.

In the hydraulic diagrams, for individual elements standardized markings are used to symbolize their function. To illustrate hydraulic circuits it is most common to use the DIN ISO 1219 standard. According to this standard, the distributor are represented by several connected squares, the number of squares corresponds to the number of stable states of the distributor and the corresponding functional positions of the piston controlling the fluid flowing through the distributor. There are darts inside the squares indicating the direction of the flow of the controlled fluid from place with a higher pressure to the place with a lower pressure. There are also lines showing how the channels are interconnected in different positions of the piston. The channels of the distributor being closed are marked by a transversal line. The marking of the distributors corresponds to the number of external connections to the distributor, i.e. the total number of the supply channels, working channels and waste channels, if present, and to the number of stable positions of the piston controlling the flow of the fluid through th e distributor. E.g. marking 4/2 of a distributor means that it is a four-way distributor having two stable positions of the piston used to control the flow of the fluid through the distributor. Please note the number of control channels to controll the movement of the piston in the distributor is not counted into said number of the external connections of the distributor.

Typical examples of hydraulic circuits with high-viscosity oils and greases are e.g. dual-line lubrication systems, multi-line lubrication systems with progressive distributors. Both of these systems are facing with problems on enormous demands on the pressure source, on the dimension of the pipeline, and of course on how technically the passive and control elements are constructed. It means there are such requirements also on the distributors, especially the forces encountered when controlling the movement of the piston of the distributor. Till today it was necessary for lubrication circuits with high viscous oils or greases to use special, very expensive, distributors being able to withstand very unfavorable climatic conditions, since operating temperatures often gradient well below freezing point. In order to move the piston in the distributor, the piston has to overcome, during its movement inside the distributor, a large hydraulic resistance, neither magnets, nor springs can be used since they can develop only a force not sufficient for this purpose. Special distributors, usually operated by an electric motor, are used only to control essential function of alternating the operating pressures in the pair of main pipelines in case of dual-line lubrication systems. In addition to distributors in lubricating circuits using a special electric motor to control the movement of the piston of the distributor, in terms of their reliability, the controlled movement of the piston of the distributor can be provided hydraulically or pneumatically. The prior art hydraulically actuated distributors, eg. four-way, two or three positional distributors RSH-2-06 supplied by PQS Technology, consist of a distribution and control section. Their distribution section consists of a housing/body, in a valve chamber of which linear piston is axially arranged so to interconnect the inlet, working and waste channels respectively. As appropriate, the movement of the piston is controlled hydraulically either in both its directions, or only in one direction, being returned to its initial position by a spring force. Hydraulic control unit for controlling the movement of the piston comprises a flange, having a cavity/ control chamber where an actuating is movabla arranged so to convey a force effect of the pressure fluid to the front of the piston, said pressure fluid being externally supplied into said unit. A similar control of the piston movement can be found in other state of art distributors, e.g. in a distributor commercially available as WH06, manufactured by Q-hydraulics, or as RPH2-06, manufactured by a Agro-Hytos company. As already mentioned, these distributors are, however, designed only for low to medium viscose oils, not suitable for heavier oils with bigger density or for greases. An external supply of control pressure fluid is required for their function, thus usually a hydraulic or a pneumatic circuit consisting at least of a pressure source and of multiple-way distributor, connected to the hydraulic control unit, is usually required.

Lack of economically acceptable and also reliable distributor leads to the fact, that regardless of the optimal need, all lubrication points connected both to the two-line and progressive lubrication systems, are lubricated simultaneously.

The Czech patent application No. PV2015-69 provides a solution which instead of the piston distributor uses a self locking gear pump. However, there is a disadvantage of such technical solution since there are problems with an undesirable ingress of the lubricant at the higher operating pressures.

### SUMMARY OF THE INVENTION

The above disadvantages are eliminated by hydraulically controlled distributor for hydraulic systems, i.e. systems with hydraulic fluid, particularly for lubricant distribution system, the lubricant being preferably oils and greases, especially preferably high viscose oils and greases, as defined in the claim 1 of the present invention.

For the purposes of this application, the term hydraulic system or hydraulic circuit means a group of hydraulic and other elements ensuring the desired function. In case of a lubrication system/circuit the function is to lubricate. For the purposes of this application, the term hydraulically controlled distributor, or just a distributor, should be understand to be provided with a body having a cavity in it, in order to provide a valve chamber for a piston, in said cavity a piston for controlling the flow of the hydraulic fluid is movably arranged ptovide for a rectilinear motion within said cavity, the outer cylindrical surface of the piston being designed to close or to connect at least one working channel, i.e.the outlet channel of the fluid controlled by the distributor, entering into said valve chamber, with at least with one supply channel, i.e. the inlet channel of the fluid controlled by the distributor, in certain embodiments of the distributor optionally with at least one waste channel, also being terminated in the valve chamber, the distributor also includes a control section to control the motion of the piston controlling the distribution of the fluid. As a particularly advantageous embodiment, the distributor according to the invention includes a compelet control hydraulic circuit ensuring the movement of the piston. The distributor according to the invention can advantageously also contain an approproiate pump as well as other hydraulic components which are required to provide the controlling movement of the piston.
The idea of the design of the distributor of the present invention is to reduce the hydraulic resistance generated during extrusion of excess grease from the opposite control chamber of the distributor when changing the position of the piston within the distributor. When the fluid controlling the movement of the piston is tranferred from a space adjacent to one face of the piston, i.e. from the control chamber controlling the movement of the piston into the opposite control chamber, e.g., by means of a properly connected pump, a pressure gradient will occur between these two control chambers forcing the piston to move.

Compared to an electromagnet the proper pump, in particular a gear pump, of the hydraulic fluid, used to control the movement of the piston, is able to control the distributor piston movement in both its directions of displacement, thus permitting reliable repeated movement of the piston between the desired positions of the distributor, eliminating the need to ensure the return of the piston to its basic position by a return spring or any other additional mechanism. Additionally, the pump is capable to grant larger stroke to the piston and is capable also to develop more uniform force effect. The larger stroke of the piston means substantially reducing the demands on the manufacturing tolerances of its mounting, which leads to further savings in production costs and to a possibility of achieving a bigger overlap of the channels by the piston leading to minimizing the leakage of the hydraulic fluid between channels.

For the purposes of this application, the terms "hydraulic system", "hydraulic circuit", "lubrication system" and "lubricating circuit" will be used interchangeably, having substantially the same meansing since all these terms refer to systems / circuits containing any suitable hydraulic fluid, especially high-viscosity oils and greases with high viscosity, such as e.g. industrial bearing greases and the like. The term "hydraulic circuit" or "hydraulic system" for the purposes of the present invention should be recognized also as a lubricating circuit or system, and all these terms should be, for the purposes of this application, considered as being used interchangbly, serving mainly to illustrate the subject of the invention. They should not be construed as limiting the scope of protection to the specific embodiment. An advantage af the present invention is, that it does not require expensive components such as in particular electromagnetically actuated valves, control a hydraulic or pneumatic circuits with a multipath distributor and another source of pressure, to allow controlling the hydraulic flow in a distributor, but a relatively inexpensive pump, particularly a proper low pressure mini gear pump, driven preferably with a suitable electric motor with a planetary gearing, thanks to which the production costs of the distributor are substantially reduced.

### BRIEF DESCRIPTION OF DRAWINGS

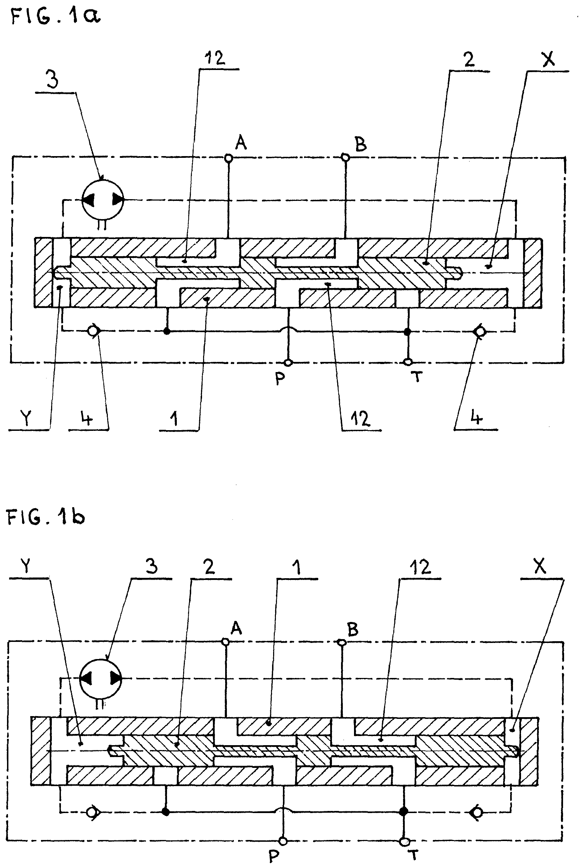

Figures 1 and 1b schematically show a longitudinal cross section of the hydraulically controlled distributor according to this the invention, being shown in two working positions. Th distributor being a 4/2-way type with one supply channel, two working channels, one drain channel and two control channels, wherein the piston movement is controlled through a suitable bidirectional pump connected to both control channels.

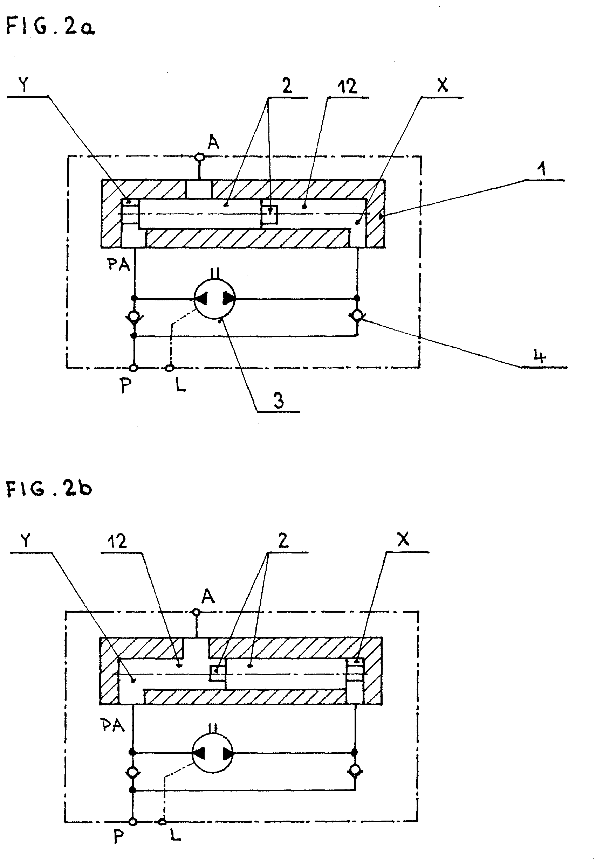

Fig. 2a and 2b schematically show a longitudinal cross section of a the simplest hydraulically controlled 2/2-way piston distributor according to the invention with one supply inlet channel, one working channel and two control channels, one of them being associated with the inlet channel, and one drain channels allowing to drain the leakage of control fluid leakage from the bidirectional pumps, being also shown in two working positions.

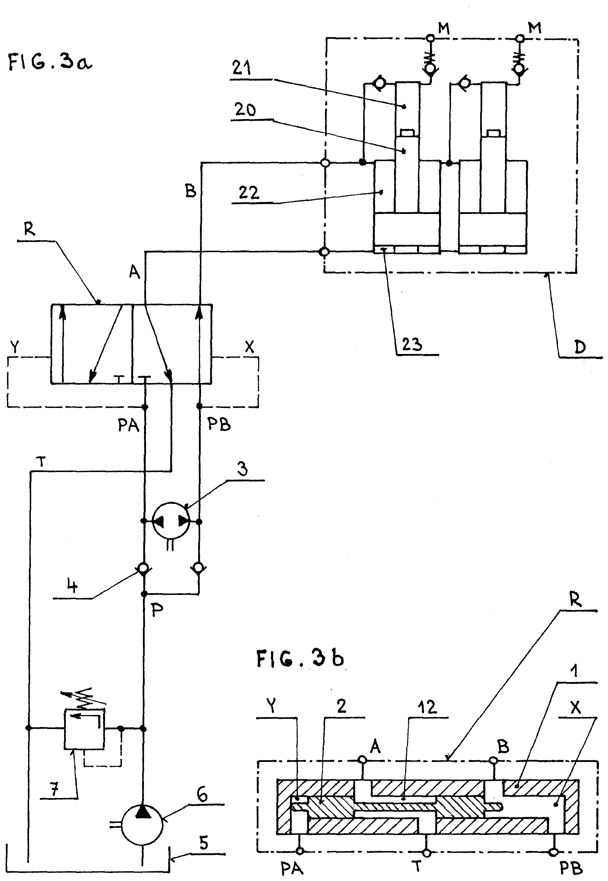

Fig. 3a shows a hydraulic diagram of a simple dual-line lubrication circuit having a differential dispenser for two lubrication points, controlled by a 5/2-way hydraulically controlled distributor according to the invention with two supply channels, two working chaneels, one drain channels and with two control channels associated with the supply channels, the distributor piston being controlled by a bi-directional pump capable to rise a pressure gradient between the control chambers to displace the piston as required.
Fig. 3b schematically shows a longitudinal section of a 5.2-way piston distributor from Fig. 3a.

### DETAILED DESCRIPTION OF PREFERRED EMBODIMENTS

FIG. 1a and 1b show the first preferred embodiment of the distributor according to the invention in the two working positions, shown in a longitudinal schematic cross section. It is a hydraulically controlled piston distributor with a linear movement of the piston, having one supply channel P, two working channels A, B, one drain channel T being internally bifurcated, and two control channels X, with two stable positions of the piston 2, thius the marking of the distributor is 4/2. This distributor includes distribution section and a control section, wherein the hydraulic fluid, the distribution of which being controlled by the distributor, enters the distribution section but is also used in the control section for controlling the movement piston.

The distributor on the Fig. 1a and 1b is a four-way, two position distributor with the marking 4/2. This distributor is provided with two working channels A, B, that lead from the distribution section of the distributor to two places of the consumption of the hydraulic fluid controlled by the distributor, with one supply channel P to supply the hydraulic fluid into the distributor and with said waste channel T to divert the hydraulic medium from that channel being, at a given moment, not hydraulically connected to the inlet channel P of the hydraulic medium. The type of the distributor determines the number of working channels in this case. It is important to note that basically the number of working channels conducting the hydraulic medium, controlled by the distributor, is determined by the intended use of the distributor and not being essential for the subject of the invention. Neither a presence of the waste/drain channel is important for the subject of the invention, since the drain channel is used only in certain applications of the distributor. In certain embodiments it is not present at all. Please note that the number of supply channels, working channels, drain channels and control channels used in any embodiment from the attached drawings and described in the mentioned examples of the embodiment does not constitute limitations to the invention, in any sense. It is important to note that the distributor according to the invention should always include at least one supply inlet channel, one working channel and two control channels in order to control the hydraulic medium, but it is not neccesry to contain any drain channel. Furthermore, it is important to note that the inlet channel may also serve as a supply of the control hydraulic medium into the control chambers to ensure the required movement of the piston when controlling the output of the hydraulic fluid controlled by the distributor according to the invention.

The distributor according to the invention comprises a distribution section with a housing 1, the housing 1 containing a cavity to form a valve chamber 12 in which a piston 2 is slidably arranged. Into the valve chamber 12, two discharge working channels A, B, an inlet channel P and an internally bifurcated exhaust channel T allowing the outlet of the hydraulic fluid from that working channel, which is not currently connected to the supply of the hydraulic fluid into the distributor. Preferably, drain channels may be arranged in the respective working channels, serving for discharging the hydraulic fluid from the working area of the working channel when this working channel is closed by the piston. At sides of the piston two control chambers X, Y are provided, connected to the drain channel of the hydraulic medium via a check valve 4, thus designed to enable a connection of both chambers through a bidirectional pump 3 for controlling the movement of the piston, see below. During the control / regulation of the hydraulic fluid exiting from the distributor, the movement of the piston 2 in both its directions is carried out by means of controlling the pressure of the hydraulic fluid being ciculated from one control chamber into the another one via a bidirectional pump 3. This pump may, according to the invention particularly preferably a gear pump. The hydraulic fluid is supplied to the distributor from a pressure source of the hydraulic fluid, not shown here, e.g. from a hydraulic or lubrication device; the pressure source allows for a supply of the hydraulic fluid into the distributor with the necessary pressure through the supply channel P.

The control section of the distributor to control the movement of the piston 2 of them distributor, comprises end faces of the piston 2, control chambers X, Y linked by the linking channels with a bidirectional pump 3.The pump 3 is a gear pump in this embodiment. The control section advantageously also includes a pair of check valves 4 to prevent the hydraulic fluid to drain back to the source during the movement of the piston in the appropriate direction. The arrangement of the check valve is such as to allow this hydraulic control circuit to suck in, i.e. to add, the hydraulic medium being lost due to an internal leakage of the distributor. The check valves 4 are arranged in the input of the hydraulic fluid into the control chamber X, Y. The control chambers X, Y are separated from the piston channels B, A, T, so there is no other hydraulic connection therin than the interconnection through said bidirectional pump 3. The adjustment of the working position of the piston 2 is provided by the bidirectional pump 3 as required by pumping the hydraulic medium from one control chamber X/Y into the respective opposite control chamber Y/X to control the movement of the piston. Due to the pressure gradient formed between the opposing controllers chambers X, Y, the piston 2 is moved to its desired working position, i.e. the piston is moved in the direction from an increasing volume of one control chamber into the shrinking volume of the the second control chamber, i.e. from the increasing pressure towards the decreasing pressure.

The piston 2 is illustrated on Fig 1a in its left, called here first, operating position, in which the piston opens the path from the supply channel P to the working channel B, and simultaneously it connects the working channel A with the drain channel T. After moving the piston 2 to its right, i.e. the second, working position, see Fig.1b, the piston opens a path from the supply channel P to the working channel A, and simultaneously the connection of the inlet channel P with the working channel B is closed, the working port B being connected with the drain channel T for relieving the pressure in the working channel B, e.g. in order to allow the return of the dosing piston of a lubricant dispenser into its initial position, the lubricant dispenser is a specific example of the hydraulic circuit, not shown on Fig 1a or 1b. Suitable dispenser for dosing the lubricant is described e.g. in Czech patent application No. PV2012-507,

In Fig. 2a and 2b there is shown the substantially simplest version of a 2/2 hydraulically controlled piston distributor according to the invention, also in two working positions. It is shown as a longitudinal schematic section substantially. The distributor is provided with one working channel A, with one supply channel P of the hydraulic fluid medium and with a pair of control channels X, Y, Z where Y is associated with a feed channel PA. One of the control chamber is connected to the supply channel of the hydraulic fluid medium, while the other control chamber is supplied with said hydraulic medium separately. The hydraulic medium is either controlled by the distributor, and it also serves to control the displacement of the piston for such control. It should be obvious for a man skilled in the art that the description given in connection with the embodiment of FIG. 1a, 1b, may be correspondingly also applicable to the embodiment of Fig. 2a, 2b, thus hereinafter will be described essentially only the differences of the embodiment of the distributor from Figs. 2a, 2b. The piston 2 distributor is slidably arranged within the valve chamber 12, into which one inlet supply channel P leads to, to supply the controlled hydraulic medium, as well as a working channel A, through which the hydraulic medium is discharged from the distributor to the place of its consumption, e.g. to a lubrication point or to a hydraulic motor or the like. The hydraulic control circuit for controlling the movement of the piston comprises two opposing faces of the piston 2, two control chambers X, Y connected via connecting channels with a bidirectional pump 3 and separated from the inlet port P by a pair of unidirectional valves 4.

In Fig. 2a the piston 2 is shown in its left operating position and it closes the controlled fluid path from channel P to the channel A. The right working position of the piston is shown on Fig. 2b, the piston 2 is moved by trannferring the hydraulic fluid from the control chamber X to the control chamber Y by acting the bidirectional pump 3. After moving the piston to the rightmost position a path for the controlled fluid into the working channel A is opened. When the pump 3 remains switched on after moving the piston 2 to its rightmost position, the pressure P of the controlled fluid will be increased to a pressure PA. In case the pump 3 is going to have a sufficient power, this pressure increase may be significant, thus the distributor can be used as a pressure amplifier.

The embodiment of the 2/2-way distributor from this figure will be particularly beneficial for group lubricating with progressive distributors.

On Fig. 3A it is shown a hydraulic diagram of a simple dual-line lubrication circuit, as an example of a hydraulic circuit, for two lubrication points M, in its resting position. Said circuit comprises a distributor similar to the distributor of Figs. 1a, 1b or Figs. 2a, 2b, with the difference that since this distributor is intended for a use in the lubricating circuit it has only one drain channel T. In this embodiment the hydraulic medium is a lubricant. In the embodiment of FIG. 3 according to the present invention, the distributor R is a 5.2-way hydraulically controlled pistonm distributor, the hydraulic control circuit comprises two opposite faces of the piston 2, two control chambers X, Y and a bidirectional pump 3 being connected through pipes and connecting channels PB, PA with the control chambers X, Y.

The lubricating circuit includes further the bidirectional pump 3 together with a pair of unidirectional valves 4 for controlling the piston 2 displecament, similarly as e.g. in the previous exemplary embodiment on Figs. 2a and 2b. In this embodiment the pump 3 is preferably a gear pump. The lubricating circuit further comprises a lubricant reservoir 5, a pressure source 6, a bypass valve 7 and a dual-line differential dispenser D, everything being respectively interconnected by hydraulic pipelines. In this embodiment the lubricating circuit comprises the dual-line differential dispenser D, a distributor R according to this invention, the hydraulic control circuit of which comprises the bidirectional pump 3, the pair of valves 4, a hydrogenerator 6, pipes P, PA, PB, A, B, T, the reservoir 5 and the safety valve 7 for a protection of the circuit against an excess pressure.

FIG. 3b shows a longitudinal schematic sectional view of the piston-way distributor 5/2 R with the piston 2 in its left working position, where the working channel A is connected with the drain channel T, while the supply channel PB is connected with the working channel B. The control channels X, Y are associated with the supply channels PB and PA. The lubricating circuit works in cycles consisting of a filling phase, in which the lubricant in the pipe B is under pressure, and a extrusion phase in which the lubricant is under pressure in line A. During the extrusion phase, the pressure of the lubricating fluid supplied from the source of the hydraulic fluid, i.e. lubricant in this case, into the working channel A may be increased at point PA by the gear pump 3 to a pressure higher than it was provided by the source. The source of hydraulic fluid can be e.g. a central pump, in this example, being the source of the hydraulic medium. This is particularly advantageous, since it allows to obtain on output from the distributor with a higher pressure than it was provided by the central pump at input.

During the filling phase the pressurized lubricant is brought through the pipe P from the central source 6 of the lubricants, preferably a hdyrogenerator, to the pair of the check valves 4, further to the bidirectional pump 3 and via the pipelines PA, PB to the control chambers Y, X of the distributor. The biderictional pump 3 is at a rest, the same pressure acts on both faces of the piston piston 2, the possible local hydraulic loses are neglected,, i.e. the pressure at the point PA is equal to the pressure at the point PB and it is equal to the inlet pressure P, respectively, thus there is no pressure gradient tending to move the piston into its right position and to close the path allowing passage of the lubricant to upper control chambers 22 and to the dosing chambers 21 of the dispenser D. Differential dosing pistons 20 at this stage, if they are not already, will move to the lower position, pushing the lubricant located in the bottom of the control chamber 23 through the pipleines A and T into the lubricant reservoir 5. The dosing chambers 21 will be filled with a new lubricant.

During the extrusion phase the hydrogenerator 6 is left running and the bidirectional pump 3 starts to pump the lubricant in the direction from the inlet channel PB to the inlet channel PA. The pressurized lubricant is brought by the overpressure of the pump 3 into the control chamber Y through the supply line PA, wherein the resulting pressure gradient between this control chamber Y and the opposite right control chamber X causes the dsiplacement of the piston 2 into its right position. Meanwhile, the lubricant located in the control chamber X is transferred to the control chamber Y. It is preferred to keep the bi-directional pump 3 running even after the piston 2 has moved to its right position where the lubrication path from the working port A to the lower control chamber 23 of the dual-line dispenser D is opened. The pressure of the lubricant supplied to the lower control chamber 23 is amplified compared to the pressure of the lubricant supplied from the source 6, in this exemplary embodiment represented by the hydrogenerator. At this moment the bidirectional pump 3 has a function of a hydraulic fluid pressure multiplier. At this stage, the differential dosing pistons 20 push simultaneously the lubricant located in the upper control chambers 22 through the pipelines B, T to the reservoir 5, and due to the multiplied effect a dose of the lubricantis pushed from the dosing chambers 21 to the exit points of the dual-line dispenser D. To end this phase it is advisable to bring the lubricating circuit to the starting position, that is to change the operation of the bidirectional pump 3 and thus to move the piston 2 into its left position.

Lubricating circuit works in cycles, which consist of the filling phase, i.e. the pressurized lubricant/ i.e. the lubricant under pressure/ from the source is in the pipeline B, and the extrusion phase with the pressurised lubricant in the pipeline A. A pressure of the lubricant as supplied from the source, e.g. from a central pump, can be advantageously amplified in the pipeline A by the gear pump 3 during the extrusion phase. The above mentioned arrangement of the 2/2, 4/2 and 5/2-way piston distributors, controlled by the bi-directional pump in accordance with subject of the present invention, should not be considered as exhaustive. Generally these distributors can be provided as multiway distributors, possibly as multistage distributors, e.g. through a gear pump stepper motor. The use of such distributors is not limited to controlling the flow of viscous, i.e. having large viscosity, oils and greases in the systems of central loss lubrication, but if desired they can be used in hydraulic circuits, particularly where usual electromagnets are not enough.

When there is no need to amplify the pressure P of the controlled fluid, as particularly advantageous it appears to use a gear mini-pump as the bidirectional pump 3, being driven e.g. by a micro electric motor with a low power, a power of the order of several Watts is possible, with a planetary gear. Such arrangement does not require too much of the installation space, and is capable of integration into one unit together with the distributor. Such piston distributor could be price competitive also for electromagnetically controlled hydraulic distributors for the hydraulic circuits with conventional hydraulic oils, particularly in cases where it is otherwise necessary to use a pair of electromagnet,

Individual operations described in connection with some of the images are intended to be applicable as operations in connection with other pictures, when not explicitly forbidden or when it is clear for a man skilled in the art that such application is not appropriate or possible. The shown examples serve merely to illustrate the invention to those skilled in the art and should not be construed as being limited to these examples. Word comprising is used in this invention and should be construed in an open sense, therefore it is possible to add further optional components, bot mentioned in these examples, which do not change the subject of the invention, however.

## Claims

1. Hydraulically controlled distributor for hydraulic and lubricating circuits, especially for systems of central loss lubrication with viscous oils and greases,
the distributor comprising a body (1) at least comprising one supply channel (P) and one working channel (A) being terminated in a valve chamber (12) to supply the hydraulic fluid from the supply channel (P) to the at least one working channel (A), and at least one piston (2) being slidably arranged in the valve chamber (12), and further comprising at least two control chambers (X, Y) arranged on opposite sides of the piston (2) for controlling the movement of the piston (2) in the distributor,
**characterized in that,**
said at least two control chambers (X, Y) are connected to a bi-directional pump (3) to increase the pressure in one of the control chamber and to reduce the pressure at least in the area associated with the second one of the control chambers, wherein in order to change the position of the piston (2) at least a portion of hydraulic fluid is pumped from one control chamber (X) to the other control chamber (Y) to induce a pressure gradient between the two controllers chambers (Y, X), which gives a piston piston (2) in motion, in the direction of the increasing pressure in the control chamber (Y) to the decreasing pressure in the control chamber (X), wherein by a proper running direction af the pump (3) the piston is moved to the desired direction for controlling the flow of the hydraulic fluid through the distributor.

2. Hydraulically controlled distributor according to claim 1, **characterized in that,**
the bidirectional control pump (3) is a gear pump.

3. Hydraulic controlled distributor according to claim 1 or 2, **characterised in that,**
the control chamber (X, Y) are separated from the supply line (P) by a couple of unidirectional valves (4), respectively from the input channel (P), or from the drain channel (T).

4. Hydraulically controlled directional valves according to claim 2, **characterized in that,** the pressure of the distributor controlled hydraulic medium is at least momentarily amplified by a gear pump (3) at the exit from the distributor.
